Europäisches Patentamt

European Patent Office

Office européen des brevets

(11) Veröffentlichungsnummer: **0 164 312**
**B1**

# (12) EUROPÄISCHE PATENTSCHRIFT

(45) Veröffentlichungstag der Patentschrift: 06.02.91

(51) Int. Cl.⁵: **H 04 Q 7/04**

(21) Anmeldenummer: 85810214.8

(22) Anmeldetag: 07.05.85

(54) **Verfahren zum Fern-Einspeichern mindestens einer Kennung in ein Funkgerät und Funkgerät zur Durchführung des Verfahrens.**

(30) Priorität: 11.05.84 CH 2323/84

(43) Veröffentlichungstag der Anmeldung:
11.12.85 Patentblatt 85/50

(45) Bekanntmachung des Hinweises auf die
Patenterteilung:
06.02.91 Patentblatt 91/06

(84) Benannte Vertragsstaaten:
AT BE CH DE FR GB IT LI NL SE

(56) Entgegenhaltungen:
EP-A-0 050 732
EP-A-0 074 940
GB-A-2 068 616

(73) Patentinhaber: Ascom Autophon AG
Ziegelmattstrasse 1-15
CH-4500 Solothurn 3 (CH)

(72) Erfinder: Christen, Roland
Klusstrasse 18
CH-4900 Langenthal (CH)
Erfinder: Meier, Felix
Haselweg 29
CH-4515 Oberdorf (CH)

(74) Vertreter: Schweizer, Hans et al
Bovard AG Patentanwälte VSP Optingenstrasse
16
CH-3000 Bern 25 (CH)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf Funkeinrichtungen für doppelt gerichteten Verkehr, in welchen mindestens ein Teil der ausgesendeten Signale Kennungen enthalten, wobei diese Signale ausschliesslich von auf die betreffende Kennung ansprechenden Gegenstationen empfangen werden können.

Eine bekannte Einrichtung dieser Art ist in der US—PS Nr. 4 332 981 beschrieben. Es handelts sich dabei um ein schnurlose Telefoneinrichtung mit einem fest zugeteilten Funkkanal, bei welcher ein Mikrotelefon-Handgerät'über den Funkkanal mit einem Basisgerät und über dieses Basisgerät mit dem Telefonnetz verbunden ist. Um Betriebsstörungen durch andere Funkrichtungen auf dem selben Kanal zu vermeiden, wird alle Sekunden mittels eines dem Sprachfrequenzband unterlagerten Signals ein 3-Bit-Code als Kennung vom Hand- zum Basisgerät übermittelt. Die Kennung wird dabei durch Schalter vorgewählt, welche vor der Aufnahme der Uebermittlungen von Hand eingestellt werden. Im Basisgerät wird der empfangene Code mit einem dort in gleicher Weise voreingestellten Code verglichen. Bei Nichtübereinstimmung wird nach zehn Sekunden die Verbindung unterbrochen.

Eine entsprechende Kennung wird in der Gegenrichtung übermittelt, jedoch als 1470-Hz-Signal und nur während dem Rufsignal aus dem Telefonnetz. In einer solchen Einrichtung kann ein Unberechtigter, sofern er den richtigen Kanal und den einfachen Code gefunden hat, an einem eigenen Funkgerät Verbindungen auf Kosten eines andern aufbauen.

Diese Nachteile werden bei einer andern bekannten schnurlosen Telefoneinrichtung nach der europäischen Patentanmeldung EP 0 074 940 behoben. Hier dient ein 15-Bit-Code als Kennung für beide Gesprächsrichtungen, was den Missbrauch erschwert und zusammen mit der Anwendung eines automatischen Kanalbündelsystems den Betrieb von sehr vielen Gerätepaaren auf einer beschränkten Zahl von gemeinsamen, abwechslungsweise benützten Kanälen ermöglicht. Der Betrieb dieses Systems wickelt sich in folgenden Phasen ab:

Ruhezustand: Jeder der beiden Empfänger sucht ständig oder periodisch ein Bündel von vierzig Frequenzen im 900-MHz-Band daraufhin ab, ob von der Gegenseite ein Signal gesendet wird, das eine dem betreffenden Empfänger entsprechende Kennung enthält.

Anruf vom Handgerät nach der Telefonzentrale: Im Handgerät wird eine Einschalttaste betätigt, worauf der Empfänger anstelle eines Kanals mit einer bestimmten Kennung einen freien Kanal sucht. Der Empfänger stoppt seinen Suchlauf auf dem nächsten freien Kanal, und der Sender sendet auf der dem gefundenen Kanal entsprechenden, um 45 MHz höheren, Duplex-frequenz ein Signal aus, das die Kennung des Empfängers des dem betreffenden Handgerät zugeordneten Basisgerätes enthält.

Im Basisgerät hält der Empfänger aufgrund der empfangenen Kennung seinen Suchlauf auf der vom Handgerät aus belegten Frequenz an, und der Sender sendet auf der vorher durch den Empfänger des Handgerätes gefundenen freien Frequenz ein Signal mit der Kennung des Handgerätes al Quittung. Im Handgerät, dessen Empfänger bereits auf der zuerst freien und jetzt belegten Frequenz steht, wird die empfangene Kennung mit der im Handgerät gespeicherten, dem Empfänger zugeordneten Kennung verglichen. Bei Uebereinstimmung wird die Telefonleitung belegt, und es können Signale zur Nummernwahl an das Basisgerät und die Telefonzentrale durchgegeben werden.

Die in den beiden Richtungen verwendeten Kennungen können dabei gleich oder verschieden sein.

Verbindungsaufbau aufgrund eines Anrufs von einem Teilnehmer im Telefonnetz her: Das Rufsignal der Zentrale bewirkt im Basisgerät das Umstellen des Suchlaufs auf die Suche nach einem freien Kanal. Die weiteren Vorgänge laufen im wesentlichen entsprechend denjenigen der vorstehend beschriebenen Vorgänge, jedoch zum Teil mit vertauschten Rollen, ab, so dass auf eine nochmalige Beschreibung verzichtet werden kann.

Der genannte 15-Bit-Code erlaubt, den Geräten über 30'000 unterschiedliche Kennungen zuzuteilen, wobei diese Kennungen je für Sende- und Empfangsseite in Lesespeichern festgehalten werden. Dieser hohen Leistungsfähigkeit in bezug auf Betrugsverhinderung steht als Nachteil die Notwendigkeit gegenüber, vor der Inbetriebnahme die komplizierten Kennungen zuverlässig je in die beiden Geräte vieler Paare einzuspeichern. Es ist naheliegend, dafür ein besonderes Programmiergerät zu verwenden. Sofern ein solches Gerät nur beim Hersteller vorhanden ist, müssen Basis- und Handgerät bis zur Inbetriebnahme paarweise gelagert und dürfen bei der Auslieferung nicht verwechselt werden. Der Hauptnachteil ergibt sich jedoch im Unterhaltsdienst, indem bei einem Defekt in einem Gerät jeweils beide Geräte ausgewechselt werden müssen.

Eine Telefon-Notrufanlage, in welcher sich ebenfalls die Aufgabe stellt, in verschiedenen Geräten individuelle Kennungen zu speichern, ist in der europäischen Offenlegungsschrift EP—A—50732 beschrieben. Jene Anlage weist eine zentrale Meldestation und eine grosse Zahl von Notruf-Stationen auf. Von jeder dieser Notruf-Stationen aus kann die Meldestation selbständig angewählt werden, wobei über die derart aufgebaute Verbindung die Notruf-Station eine Kennung abgibt, anhand welcher an der Zentralstation die Herkunft des Notrufs festgestellt werden kann. Daraus ergibt sich, dass bei der Neueinrichtung von Notruf-Stationen, bei deren Auswechslung und bei der Aenderung der Anrufnummer der Meldestation die Notruf-Stationen jeweils in bezug auf die Anrufnummer und. die Kennung neu- bzw. umprogrammiert werden müssen.

In der bekannten Anlage wird diese Programmierung als Fern-Programmierung durch ein mit der Meldestation verbundenes Programmiergerät bewerkstelligt, indem über eine zwischen der betreffenden Notruf-Station und der Meldestation in beliebiger Richtung aufgebaute Verbindung das Einspeichern der Daten für Kennung und Notruf-Nummer ohne besondere Manipulation an der Notruf-Station gesteuert wird.

Auch an den Geräten einer Personensuchanlage (sog. Pager) nach der britischen Patentanmeldung Nr. 2 068 616 wird für die Fernprogrammierung eines neuen Adressencodes keine besondere Manipulation vorgenommen. Nach dem Einschalten der Geräte erfolgt das Programmieren auf einfachste Weise durch blosses Eintippen des neuen Codes an einem Tastenfeld der Zentraleneinrichtung durch die Bedienungsperson dieser Einrichtung. Vom gleichen Tastenfeld aus kann auch ein Umschalter betätigt werden, welcher die Art der Uebermittlung des Codes bestimmt: Letztere kann entweder galvanisch über Kontakte an den in ein Behältergerät der Einrichtung gesteckten Rufempfänger geschehen, oder abder elektromagnetisch über eine Sendeantenne auf Distanz. An beiden beteiligten Geräten zeigen Bildschirme den eingestellten Code zur Ueberprüfung an.

Die noch nicht programmierten Rufsignalempfänger können an einem gemeinsamen Ort gelagert, nach Bedarf dort bezogen und individuell programmiert werden. Irgendwelche Geheimhaltung oder Erschwerung der Programmierung ist dabei nicht vorgesehen und im allgemeinen bei solchen Rufanlagen auch gar nicht erwünscht. So sollen diese Codes z.B. den hauseigenen Telefonnummern oder der Raumaufteilung entsprechen können.

Mit der vorliegenden Erfindung wird die Aufgabe der Programmierung von zwei zusammenarbeitenden Funkgeräten unter Beibehaltung der bisher bekannten Vorteile so ausgestaltet, dass ein erhöhter Schutz gegen das missbräuchliche Eindringen nichtberechtigter Geräte in die Funkverbindungen erzielt wird.

Die Erfindung betrifft ein Verfahren zum Einspeichern mindestens einer Kennung in ein erstes Funkgerät gemäss dem Oberbegriff des Patentanspruchs 1.

Durch die Massnahmen gemäss der Erfindung, wie sie im Kennzeichen des Patentanspruchs 1 umschrieben sind, wird erreicht, dass nur Personen, welche die besonderen erschwerten oder geheimgehaltenen Manipulationen an beiden Geräten eines Paars kennen, die zum normalen Betrieb der Geräte erforderliche(n) Kennung(en) einspeichern können.

Die Erfindung betrifft auch ein Funkgerät zur Durchführung des Verfahrens gemäss Anspruch 1. Die Erfindung wird im folgenden an Hand eines Beispiels erläutert.

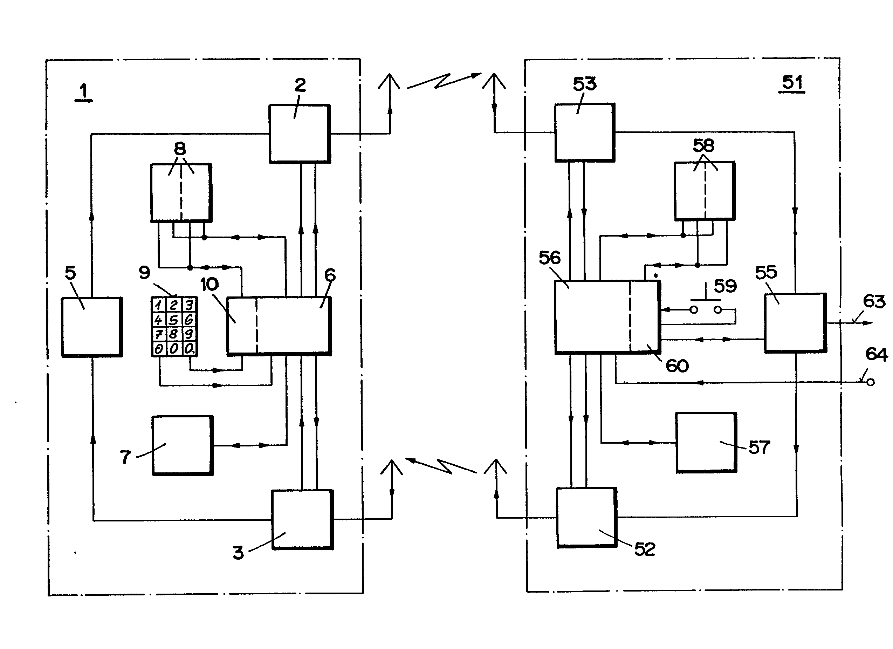

Die einzige Figur zeigt ein Blockschema einer schnurlosen Telefoneinrichtung, wobei allgemein bekannte Teile und Verbindungen, wie etwa zur Steuerung und Stromversorgung, weggelassen sind.

Die schnurlose Telefoneinrichtung umfasst ein bewegbares Handgerät 1 und ein fixes Basisgerät 51. Beide Geräte enthalten wenigstens teilweise gleiche Funktionseinheiten, nämlich jeweils einen Sender 2 bzw. 52, Empfänger 3 bzw. 53, Sprechstromkreise 5 bzw. 55 und eine Steuerung 6 bzw. 56. Die Empfänger sind in in der Einleitung beschriebener Weise mit automatischem Suchlauf ausgerüstet und benützen gemeinsam mit andern Gerätepaaren ein Bündel von vierzig Kanälen, von denen jeder zwei einen Abstand von 45 MHz aufweisende Frequenzen im 900-MHz-Bereich umfasst. Sender und Empfänger jedes Gerätes werden immer auf den gleichen Kanal gesteuert.

An Speichern enthalten die Geräte je einen Festwert-Nurlese-Speicher (ROM) 7 bzw. 57 und einen programmierbaren Nurlese-Speicher (PROM) 8 bzw. 58, wobei je der erstegenannte Speicher der Speicherung von unveränderlichen Daten und Befehlen, insbesondere für das Betriebssystem eines Mikroprozessors, dient, während je der letztgenannte Speicher 8,58 zum Speichern der jedem Gerätepaar individuell zugeteilten Kennungen, z.B. in einem 20-Bit-Code, bestimmt ist.

Das Handgerät 1 ist als Mikrotelefon ausgebildet, aber zusätzlich mit Tastenfeld 9 mit zehn Nummernwahltasten "0"..."9", Ein- und Ausschalttaste sowie nicht veranschaulichten optischen und akustischen Signalgebern versehen. Gemäss der Erfindung sind die Tasten ausser mit der normalen Steuerung 6 für die Nummernwahl noch mit einer Hilfssteuerung 10 verbunden, an welche auch der elektrisch änderbare Nurlese-Speicher (EEPROM) 8 angeschlossen ist.

Das Basisgerät 51 enthält in den Sprechstromkreisen 55 eine nicht dargestellte Gabelschaltung und den Anschluss für eine Teilnehmerleitung 63 zur Zentrale. Gemäss der Erfindung enthält das Basisgerät 51 einen nur erschwert bedienbaren Schalter 59, z.B. eine im Innern des Gerätes 51 versteckte Taste oder einen Schlüsselschalter, welcher mit einer Hilfssteuerung 60 verbunden ist, die ihrerseits mit dem programmierbaren Nurlese-Speicher (PROM) 58 in Verbindung steht.

Die Signale, welche während eines Verbindungsaufbaus zwischen den beiden Geräten, vorzugsweise mit Hilfe eines digital phasenmodulierten Hilfsträgers, übermittelt werden, umfassen drei Teile: Einen Synchronisierteil, einen Kennungsteil und einen Meldungsteil. Der Synchronisierteil ist immer und für sämtliche Signale gleich. Anhand des Kennungsteils stellt ein Gerät fest, ob ein Anruf für eine fremde oder für die eigene Adresse bestimmt ist bzw. dass die Gegenstation auf einen ausgesendeten Anruf eingetreten ist. Mit dem Meldungsteil werden Belegungen, Verbindungsabbruch, Wahl und andere Zustandsangaben einer Verbindung übertragen.

Das Verfahren zum Einspeichern von Kennungen in das Handgerät 1 einer schnurlosen Telefoneinrichtung 1,51 mit automatischem Kanalbündelsystem wird nun gemäss der Erfindung nacheinander wie folgt durchgeführt:

a) Beim Hersteller wird mit Hilfe eines Progammiergerätes in jedem Basisgerät 51 über den Anschluss 64 mindestens eine individuelle Kennung in den programmierbaren Festwertspeicher 58 eingespeichert, z.B. in Form eines 20-Bit-Codes.

b) Soll eine schnurlose Telefoneinrichtung benützbar gemacht werden, so wird ein beliebiges Handgerät 1 in die Nähe, d.h. in den Sendebereich eines beliebigen nach Schritt a) programmierten Basisgerätes 51 gebracht, und beide Geräte werden eingeschaltet, wodurch die Empfänger 3,53 auf Suchlauf gehen.

c) In beiden Geräten 1,51 wird die Hilfssteuerung aktiviert; im Basisgerät 51 durch Betätigen des erschwert bedienbaren Schalters 5, im Handerat z.B. durch gleichzeitiges ausschliessliches Betätigen der beiden Wähltasten "1" und "3".

d) Das Basisgerät sucht einen freien Kanal, und das Handgerät sucht anstelle eines Kanals mit der eigenen Kennung einen Kanal, bei welchem anstelle einer Kennung ein allen Stationen gemeinsames Erlaubnissignal gesendet wird.

e) Nachdem das Basisgerät einen freien Kanal gefunden hat, sendet es auf diesem Kanal anstelle einer Kennung dauernd das genannte Erlaubnissignal.

f) Das Handgerät hält seinen Suchlauf auf dem Kanal mit dem Erlaubnissignal an.

g) Das Basisgerät sendet ein Signal, bei welchem im Kennungsteil das Erlaubnissignal und im Meldungsteil die Kennung(en) welche später vom Handgerät im Verkehr mit dem betreffenden Basisgerät angewendet werden soll(en), enthalten ist (sind).

h) Das Handgerät empfängt die Kennungen und speichert sie in seinen Nurlese-Speicher 8 ein.

i) Nachdem die Aktivierung der Hilfssteuerung an den beiden Geräten aufgehoben worden ist, kann nun ein normaler Verkehr zwischen den beiden Geräten abgewickelt werden.

Wie früher bereits erwähnt ist es möglich, für die beiden Verkehrsrichtungen eines bestimmten Gerätepaars verschiedene Kennungen zu verwenden. Sofern verschiedene Kennungen angewendet werden, ist es notwendig, je beide Kennungen in beiden Geräten zu speichern. In der Figur wird dies durch die Unterteilung der Speicher 8 und 58 in je zwei Bereiche angedeutet. Bei der Uebertragung der Kennungen vom Basisgerät zum Handgerät zwecks Einspeicherung im Speicher 8 des Handgerätes müssen, sofern zwei Kennungen angewendet werden, beide abwechslungsweise d.h. nacheinader, übertragen werden. Durch ein besonderes Merkmal an der betr. Kennung oder am Erlaubnissignal müssen dabei die Kennungen dem richtigen Speicherplatz zugewiesen werden.

Grundsätzlich könnte die Uebertragung der Kennung auch vom Handgerät nach dem Basisgerät erfolgen. Sie würde dann vom Handgerät aus eingeleitet, indem jenes Gerät einen freien Kanal sucht und ein Erlaubnissignal aussendet.

Die Erfindung ist nicht an das Ausführungsbeispeil gebunden. Das Verfahren ist auch für schnurlose Telefoneinrichtungen ohne Kanalbündelautomatik, d.h. mit fest zugeteiltem Funkkanal anwendbar. Es eignet sich ausser für Duplexauch für Simplex-Funkanlagen, z.B. für Jedermannsfunk mit frei programmierbarem Selektivruf und Kanalbündelautomatik mit oder ohne Hilfskanal. Grundsätzlich ist es auch für Mehrfrequenz-Codierung anwendbar.

Die Erfindung kann auch in einer schnurlosen Telefoneinrichtung mit automatischer Ladung des Handgerät-Akkus angewandt werden, wo die Lade-Energie induktiv oder über Kontakte übertragen wird, sobald das Handgerät auf der dafür vorgesehenen Aufnahme des Basisgerätes ruht. Unter diesen Voraussetzungen kann das die zu übertragende Kennung enthaltende Signal dem Energieübertragungskanal aufmoduliert oder aufgekoppelt werden.

Schliesslich können auch irgendwelche optische oder akustische Signalgeber an den Geräten, durch passende Sensoren ergänzt, für die Uebertragung der Kennung eingesetzt werden, soweit dies ohne zu grossen zusätzlichen Aufwand möglich ist.

Der vorzugsweise im Basisgerät befindliche programmierbare Speicher, dessen Inhalt auf den Speicher des andern Gerätes übertragen wird, muss nicht ein durch ein Programmiergerät elektrisch programmierbarer Speicher sein; grundsätzlich wäre auch ein Speicher mit Steck- oder Lötbrücken denkbar.

Die besondere Manipulation am Handgerät kann auch im ausschliesslichen gleichzeitigen Niederdruck von mehr als zwei Tasten oder im Eintasten einer bestimmten Zahl innerhalb einer bestimmten Zeit während des unbelegten Zustandes bestehen.

**Patentansprüche**

1. Verfahren zum Fern-Einspeichern mindestens einer Kennung in einen Speicher (8) eines mit einem zweiten Funkgerät (51) ein Paar bildenden ersten Funkgerätes (1), wobei zwischen den beiden Geräten dieses Paars Verbindungen mindestens in einer der Verkehrsrichtungen ausschliesslich aufgrund mindestens einer je in einem Speicher (8; 58) der Geräte gespeicherten, von einem der Geräte gesendeten und am andern empfangenen und überprüften individuellen Kennung stattfinden, und wobei die in das ersten Funkgerät (1) einzuspeichernden Kennungs-Daten in einer ersten Phase in das zweite Gerät (51) eingespeichert über den Anschluß (64) und zu einem beliebigen späteren Zeitpunkt in einer zweiten Phase vom zweiten (51) an das erste (1) Funkgerät übermittelt werden, dadurch gekennzeichnet, dass vor Beginn der zweiten Phase an beiden Geräten gleichzeitig eine besondere erschwerte oder geheimgehaltene Manipulation (9; 59) durchgeführt wird, welche erste die zweite Phase aktiviert.

2. Verfahren nach Patentanspruch 1, dadurch gekennzeichnet, dass die Uebertragung der Kennung über die gleiche Funkverbindung erfolgt, über welche die normalen Verbindungen zwischen den beiden Geräten des Paares aufgebaut werden und sich abwickeln, und dass die in den Speicher (8) des ersten Funkgerätes einzuspeichernde Kennung innerhalb des zweiten Funkgerätes (51) mit Hilfe der gleichen Schaltungsmittel (56) im Speicher (58) gelesen und alsdann ausgesendet wird, mit welchen beim Aufbau einer Verbindung zwischen dem ersten und dem zweiten Funkgerät die für diesen Aufbau benötigte Kennung gelesen und ausgesendet wird.

3. Verfahren nach Patentanspruch 2 für eine schnurlose Telefoneinrichtung mit folgenden Merkmalen

—der gegenseitige Verkehr wickelt sich auf einem Kanal ab, welcher aus einem mit andern schnurlosen Telefoneinrichtungen gemeinsam benützten Bündel von Kanälen ausgewählt ist,

—jedes Gerät sucht im Ruhezustand periodisch sämtliche Kanäle ab und bricht die Suche ab, sofern es auf einem Kanal seine individuelle Kennung empfängt,

—bei einem im normalen Betrieb erfolgenden Anruf vom genannten zweiten nach dem ersten Gerät sendet das zweite Geräte auf einem freien Kanal die Kennung des ersten Gerätes aus, worauf das erste Gerät den Anruf erkennt, die Suche abbricht und auf den gennanten Kanal eingestellt verbleibt, dadurch gekennzeichnet, dass aufgrund der genannten gleichzeitigen besonderen Manipulation an den beiden Geräten die genannten, einem Anruf vom zweiten zum ersten Gerät entsprechenden Abläufe eingeleitet werden, wobei jedoch vom zweiten Gerät anstelle der Kennung des ersten Gerätes ein auch andern Geräten gemeinsam zugeteiltes Erlaubnissignal ausgesendet wird, wobei ferner vom ersten Gerät die Suche auf den Kanälen aufgrund des Empfangs der Erlaubnissignals anstelle des Empfangs seiner eigenen Kennung abgebrochen wird und wobei die Uebertragung der im ersten Geräte neu einzuspeichernden Kennung(en) über den auf diese Weise gefundenen Kanal erfolgt.

4. Verfahren nach Patentanspruch 3 für eine Einrichtung, in welcher im normalen Betrieb die zwischen den Geräten übermittelten Signale einen Kennungsteil und einen Meldungsteil enthalten, wobei mit dem Meldungsteil auf den Aufbau oder die Aufrechterhaltung einer Verbindung bezügliche Daten übertragen werden, dadurch gekennzeichnet, dass am zweiten Gerät während der genannten besonderen Manipulation anstelle des Kennungsteils das Erlaubnissignal und anstelle des Meldungsteils die vom zweiten nach dem ersten Gerät zu übertragende Kennung ausgesendet wird.

5. Verfahren nach Patentanspruch 4 dadurch gekennzeichnet, dass während der genannten besonderen Manipulation am zweiten Gerät abwechslungsweise die Kennung des ersten und des zweiten Geräts je im Zusammenhang mit dem Elaubnissignal als zwei verschiedene Datenprogramme ausgesendet wird.

6. Funkgerät zur Durchführung des Verfahren nach Patentanspruch 1, mit einem Steuerteil (6, 10; 56, 60), welcher im normalen Betrieb der Funkgeräte den Aufbau, die Ueberwachung und den Abbruch der Verbindungen steuert, dadurch gekennzeichnet, dass der Steuerteil eine dauernd im Betrieb befindliche Hauptsteuerung (6, 56) und eine ausschliesslich durch die genannten Besondere Manipulation (9, 59) in einen aktiven Zustand versetzbare Hilfssteuerung (10, 60) umfasst, wobei die Hauptsteuerung (6, 56) den normalen Betrieb und die Hilfssteuerung (10, 60) das Uebertragen einer Kennung vom Speicher (58) des zweiten in den Speicher (8) des ersten Funkgerätes steuert.

7. Erstes Funkgerät (1) nach Patentanspruch 6, mit einer Wähltastatur (9) gekennzeichnet durch mit der Tastatur (9) und der Hilfssteuerung (10) in Verbindung stehende Stromkreise, welche die Hilfssteuerung (10) in den aktiven Zustand versetzen, solange ausschliesslich eine Mehrzahl von bestimmten geheimgehaltenen Wähltasten gleichzeitig gedrückt gehalten wird.

8. Erstes Funkgerät (1) nach Patentanspruch 6, mit einer Wähltastatur (9), gekennzeichnet durch mit der Tastatur (9) und einer Hilfssteuerung (10) in Verbindung stehende Stromkreise, welche die Hilfssteuerung (10) erst in den altiven Zustand versetzen, wenn innerhalb einer bestimmten Zeit während des unbelegten Zustandes eine bestimmte geheimgehaltene Zahl eingetastet worden ist.

9. Zweites Funkgerät (51) nach Patentanspruch 6, gekennzeichnet, durch einen der Hilfssteuerung (60) zugeordneten, erschwert bedienbaren Schalter (59), welcher die Hilfssteuerung (60) in den aktiven Zustand versetzt, solange er betätigt ist.

**Revendications**

1. Procédé pour la programmation à distance d'au moins un indicatif dans une mémoire (8) d'une première station de radio (1) constituant une paire avec une seconde station de radio (51), où entre les deux stations de cette paire, des liaison au moins selon une direction de trafic, exclusivement en vertu de ce que au moins un indicatif individuel a lieu qui est mémorisé dans une des deux mémoires (8, 58) des stations, et envoyé de l'une des stations et reçu et contrôlé par l'autre, et où les données d'indicatif mémorisées dans la première station de radio (1) sont, dans une première phase, enregistrées dans la seconde station (51) par la connexion (64) et à un moment plus tard quelconque sont transmises, durant une seconde phase, de la seconde (51) à la première (1) station de radio, caractérisé en ce que avant le début de la second phase, une manipulation particulière, plus difficile ou maintenue secrète (9, 59), est faite simultanément dans les deux stations, laquelle active premièrement la seconde phase.

2. Procédé selon la revendication 1, caractérisé en ce que la transmission de l'indicatif se fait par la même liaison radio, par laquelle les liaisons normales entre les deux stations de la paire sont établies et se déroulent, et que dans la mémoire (8) de la première station de radio, des indicatifs mémorisés à l'intérieur de la seconde station de radio (51) sont lus dans la mémoire (58) puis envoyés à l'aide des mêmes moyens de commutation (56) avec lesquels, lors de l'établissement d'une liaison entre la première et la seconde station de radio, l'indicatif nécessaire pour cet établissement est lu et envoyé.

3. Procédé selon la revendication 2 pour une installation téléphonique sans fil avec les caractéristiques suivantes:

—le trafic se déroule dans les deux sens sur un canal, lequel est sélectionné dans un faisceau commun utilisé avec d'autres installations téléphoniques sans fil,

—à l'état de repos, chaque station recherche périodiquement, parmi tous les canaux et interrompt la recherche aussitôt qu'elle reçoit son indicatif individuel sur un canal,

—lors d'un appel survenant en service normal de ladite seconde vers la première station, la seconde station envoie l'indicatif de la première station sur un canal libre, par lequel la première station reconnaît l'appel, interrompt la recherche et demeure connectée sur ledit canal, caractérisé en ce que en raison de ladite manipulation particulière simultanée aux deux stations, ledit déroulement, comprenant un appel de la seconde à la première station est prépare, où cependant, de la seconde station, au lieu de l'indicatif de la première station, un signal d'autorisation commun attribué est envoyé aux autres stations, où de plus la recherche de la première station sur les cannaux est interrompue, en raison de la réception du signal d'autorisation au lieu de la réception de son propre indicatif, et où la transmission du nouvel indicatif à mémoriser se passe, dans la première station, par dessus les canaux trouvés de cette manière.

4. Procédé selon la revendication 3, pour une transmission dans laquelle en service normal, les signaux transmis entre les stations comprennent une partie d'indicatif et une partie de message, où la partie de message comprend des indications pour l'établissement et le maintien d'une liaison qui sont transmises, caractérisé en ce que à la seconde station, durant la dite manipulation particulière, au lieu de la partie d'indicatif du signal d'autorisation et au lieu de la partie de message, l'indicatif transmis est envoyé de la seconde vers la première station.

5. Procédé selon la revendication 4, caractérisé en ce que durant ladite manipulation particulière à la seconde station, pour changer l'indicatif de la première et de la seconde station, deux différents programmes de données sont envoyés, chacun en liaison avec le signal d'autorisation.

6. Station de radio pour l'exécution du procédé selon la revendication 1, avec une partie de commande (6, 10, 56, 60), laquelle en service normal de la station de radio commande l'établissement, la surveillance et la rupture de la communication, caractérisée en ce que la partie de commande comprend une commande principale (6, 56) en service permanent et une commande auxiliaire (10, 60) commutable à l'état actif exclusivement par ladite manipulation particulière (9, 56), où la commande principale (6, 56) commande le service normal et la commande auxiliaire (10, 60) commande la transmission d'un indicatif de la mémoire (58) de la seconde vers la mémoire (8) de la première station.

7. Première station de radio (1) selon la revendication 6, avec un clavier de sélection (9), caractérisée en ce que par le clavier (9) et la commande auxiliaire (10), un circuit de conversation permanent est maintenu en liaison, lequel commute la commande auxiliaire (10) en état actif, aussi longtemps qu'exclusivement une quantité de sélections définies secrètes sont pressés en même temps.

8. Première station de radio (1) selon la revendication 6, avec un clavier de sélection (9) caractérisée en ce que par le clavier (9) et la commande auxiliaire (10), un circuit de conversation permanent est maintenu en liaison, lequel commute la commande auxiliaire (10) premièrement à l'état actif, lorsque durant un certain temps pendant l'état de repos un nombre défini, secret est composé.

9. Seconde station de radio (51) selon la revendication 6, caractérisée en ce que par un commutateur (59) utilisable avec plus de difficultés, la commande auxiliaire (60) est coordonnée, lequel commute la commande auxiliaire (60) à l'état actif aussi longtemps qu'il est actionné.

**Claims**

1. Process for remote storing of at least one identification code in a memory (8) of a first radio set (1) forming a pair with a second radio set (51), radio connections being established between the two sets of this pair at least in one direction based exclusively on at least one individual identification code stored in the memory (8; 58) of each of the sets, transmitted by one of the sets and received and checked by the other, and the identification data to be stored in the first radio set (1) being stored via the connection (64) in the second set (51), in a first phase, and conveyed in a second phase from the second (51) to the first (1) radio set at any later point in time, characterized in that, before the start of the second phase, a special manipulation (9; 59), made difficult or secret, is carried out on both sets at the same time, which activates the second phase.

2. Process according to claim 1, characterized in that the transmission of the identification code takes place via the same radio communication link upon which the normal radio connections between the two sets of the pair are based and run their course, and in that the identification code to be stored in the memory (8) of the first radio set is read in the memory (58) inside the second radio set (51) with the aid of switching means (56) and thereupon transmitted, via which switching means, in establishing a radio connection between the first and the second radio set, the identification code needed for the establishment is read and transmitted.

3. Process according to claim 2 for a cordless telephone installation with the following features

—the two-way traffic runs on a channel which is selected from a group of channels used jointly by other cordless telephone installations,

—each set in the rest state periodically scans all the channels and discontinues scanning in so far as it receives its individual identification code on a channel,

—in a call from the said second to the first set in normal operation, the second set transmits the identification code of the first set on a free channel whereupon the first set recognizes the call, discontinues scanning and remains tuned in to the said channel, characterized in that, due to the said simultaneous special manipulation on the two sets, the said steps corresponding to a call from the second to the first set are initiated, a permission signal, however, also assigned jointly to other sets, being transmitted by the second set instead of the identication code of the first set, furthermore the scanning of the channels by the first set being discontinued due to reception of the permission signal instead of reception of its own identification code, and transmission of the new identification code(s) to be stored in the first set taking place on the channel located in this way.

4. Process according to claim 3 for a installation in which the signals transmitted between the sets in normal operation contain an identification part and a message part, data relating to establishing or maintaining a connection being conveyed with the message part, characterized in that on the second set, during the said special manipulation, the permission signal is transmitted instead of the identification part, and the identification code to be conveyed from the second to the first set is transmitted instead of the message part.

5. Process according to claim 4 characterized in that during the said special manipulation on the second set the identification code of the first and of the second set is alternately transmitted, each in connection with the permission signal, as two different data programmes.

6. Radio set for carrying out the process according to claim 1, having a control part (6, 10; 56, 60), which controls the establishment, the monitoring and the cutting off of the radio connections in normal operation of the radio sets, characterized in that the control part comprises a main control (6, 56) continuously in operation and an auxiliary control (10, 60) activated solely through the said special manipulation (9, 59), the main control controlling normal operation and the auxiliary control controlling the transmission of an identification code from the memory (58) of the second set to the memory (8) of the first set.

7. First radio set (1) according to claim 6, having a dialling keyboard (9), characterized by circuits communicating with the keyboard (9) and the auxiliary control (10), the circuits activating the auxiliary control (10) as long as a plurality of certain secret dialling buttons remain simultaneously pressed.

8. First radio set (1) according to claim 6, with a dialling keyboard (9), characterized by circuits communicating with the keyboard (9) and an auxiliary control (10), the circuits activating the auxiliary control (10) only when a certain secret number is entered within a certain time during the unengaged state.

9. Second radio set (51) according to claim 6, characterized by a switch (59), made difficult to operate and associated with the auxiliary control (60), which activates the auxiliary control (60) as long as it is operated.